# EUROPEAN PATENT SPECIFICATION

(11) **EP 4 230 504 B1**
(45) Date of publication and mention of the grant of the patent: **01.05.2024**
(21) Application number: 22157454.4
(22) Date of filing: 18.02.2022
(51) Int. Cl.: B62D 5/097

(54) **HYDRAULIC STEERING UNIT**
HYDRAULISCHE LENKEINHEIT
UNITÉ DE DIRECTION HYDRAULIQUE

(43) Date of publication of application: 23.08.2023
(73) Proprietor: Danfoss Power Solutions ApS, 6430 Nordborg (DK)
(72) Inventor: Porskrog, Bendt, 6430 Nordborg (DK)
(74) Representative: Keil & Schaafhausen Patentanwälte PartGmbB

(56) References cited:
- EP-B1- 3 078 571

## Description

The present invention relates to a hydraulic steering unit comprising a supply port arrangement having a supply port and a return port, a working port arrangement having two working ports, a steering valve arrangement arranged between the supply port arrangement and the working port arrangement and having two valve elements arranged in a housing and being moveable in relation to each other to change area characteristics of orifices, and a measuring motor arranged in a line between the steering valve arrangement and one of the working ports.

Such a steering unit is known, for example, from EP 3 078 571 B1 or US 10 723 378 B2.

When the measuring motor is arranged in a working line, i.e. in a line between the steering valve arrangement and a working port, this hydraulic steering unit provides a very precise and comfortable steering. A dead band between an actuation of a steering wheel and the reaction of the steered wheels can be minimized.

However, a problem arises in that the end stop feeling in the steering wheel (or any other steering command device) will be different for the two steering directions. When the steering motor connected to the working port arrangement reaches an end position on one side, the driver of the vehicle equipped with the hydraulic steering unit feels a rather hard end stop, since the pressure of the fluid in this working line will increase and the steering motor is in the end position, so that the steering motor can no longer turn. At the other side, the end stop will be less hard, since the outlet of the measuring motor is connected to the return line and from there to tank.

The object underlying the present invention is to create similar end stop feelings in both steering directions.

This object is solved in a hydraulic steering unit as described at the outset in that back pressure means are provided generating a back pressure on the measuring motor, wherein the back pressure means are controlled by the valve elements, and friction means are provided between one of the valve elements and the housing or a rotating part of the measuring motor and the housing, respectively.

In this way it is possible to create an elevated pressure on the outlet side of the measuring motor, so that the measuring motor can no longer work when the end stop position of the steering motor is reached. Since the back pressure means are controlled by the valve elements, this requires that the two valve elements are moved in relation to each other in order to change the characteristics of some orifices. However, in some cases such a movement of the two valve elements relative to each other does not occur, when the driver rotates the steering wheel. When, for example, the measuring motor is arranged in the working line connecting the valve arrangement with the right working port and the steering wheel has been actuated to move the steering motor to the left side end stroke, is then rotated back to neutral and again rotated slowly to the left hand side, it may be possible to find a steer through phenomenon: rotation of steering wheel with a slow speed of rotation, for example up to 10 rpm (rotations per minute) does not cause a movement of the two valve elements in relation to each other and hydraulic fluid from the left working port can flow back to the return port without causing a noticeable pressure increase acting on the measuring motor.

However, when the friction means act on one of the valve elements and not on the other, a friction force produced by the friction means holds one valve element in place so that the other valve element can move in relation to the first named valve element. In this way the back pressure means can produce the required back pressure.

In an embodiment of the invention one of the valve elements is a spool actuated by a steering command device and the other valve element is a sleeve surrounding the spool, wherein the friction means act on the sleeve. The friction means hold the sleeve in place, i.e. does not allow a rotation of the sleeve, while the spool is rotated by the steering command device, for example the steering wheel. Thus, even when the spool is rotated only with a low speed of rotation, the characteristics of the orifices between the spool and the sleeve change, so that the required back pressure is generated.

In an embodiment of the invention the spool and the sleeve are connected by a neutral spring arrangement, wherein the friction means produce a holding torque which is larger than a torque of the neutral spring arrangement in a predetermined angle of rotation between spool and sleeve. In particular, the torque produced by the friction means is larger than the torque produced by the neutral spring arrangement, when the spool is fully deflected in relation to the sleeve. Thus, even if the spool is rotated in relation to the sleeve as far as it is possible, the sleeve is held in place, so that orifices which are used to create the backpressure, can fully open or close, as it is required by the back pressure means.

In an embodiment of the invention the sleeve is connected to the measuring motor and the friction means produce a holding torque which is smaller than a torque produced by the measuring motor. Despite of the friction force produced by the friction means, it is possible to return the sleeve back to a neutral position in relation to the spool.

In an embodiment of the invention the friction means comprise a compressed elastic element between the sleeve and the housing and/or between a rotating element of the measuring motor and the housing. The elastic element can be, for example, a spring arrangement or any other compressible element which produces a force acting between the sleeve and/or the rotating element of the measuring motor, respectively, and the housing. This force creates a friction between the sleeve and the housing which friction holds the sleeve in place when the spool is rotated.

In an embodiment of the invention the elastic element is arranged at a front face of the sleeve or of the rotating element, respectively. In this position, there is enough space to accommodate the elastic element, so that the construction of a conventional steering unit has not to be dramatically changed.

In an embodiment of the invention a slide ring is arranged between the elastic element and the housing. The slide ring avoids wear of the elastic element.

In an embodiment of the invention the slide ring is made of a metal, hard plastic or polytetrafluorethylene. This ring is pressed against the housing by means of the elastic element and produces thus the required friction between the sleeve and the housing.

In an embodiment of the invention the elastic element is in form of an O-ring. The O-ring is, for example, arranged in a groove and is compressed when the sleeve or the rotating element of the measuring motor, respectively, is mounted to the housing. The compressed O-ring produces the necessary forces for generating the required friction.

Alternatively or additionally, the friction means comprises a pressure chamber connected to the supply port, wherein a pressure in the pressure chamber acts radially and asymmetrically on the sleeve. When the pressure of the supply port acts on the sleeve asymmetrically and radially, the sleeve itself is pressed against a wall of a bore in the housing, in which the sleeve is arranged. This is a further possibility to generate an increased friction.

In an embodiment of the invention the backpressure means comprise in the valve arrangement a return office between the measuring motor and the return port and a variable orifice connected to the supply port and to a point between the return orifice and the measuring motor. The variable orifice opens only when the spool has been rotated over a predetermined angle in relation to the sleeve, in particular when the spool has fully been deflected. In this case, the variable orifice allows pressure from the supply port to reach the outlet of the measuring motor, so that the required back pressure is generated.

In an embodiment of the invention the return orifice is a fixed orifice. This fixed orifice does not change its characteristics during the operation of the steering unit.

The invention will now be described with reference to the drawing, wherein:
- Fig. 1: is a schematic illustration of a hydraulic steering system,
- Fig. 2: shows orifices formed by a valve arrangement of the steering unit for three different steering situations,
- Fig. 3: shows the steering system of Fig. 1 in a left end stroke position,
- Fig. 4: shows a detail IV of Fig. 3,
- Fig. 5: shows a steering unit of the steering system schematically in a sectional view, and
- Fig. 6: shows the bleed characteristics of some orifices of the valve arrangement.

In all Figures the same elements are denoted with the same reference numerals.

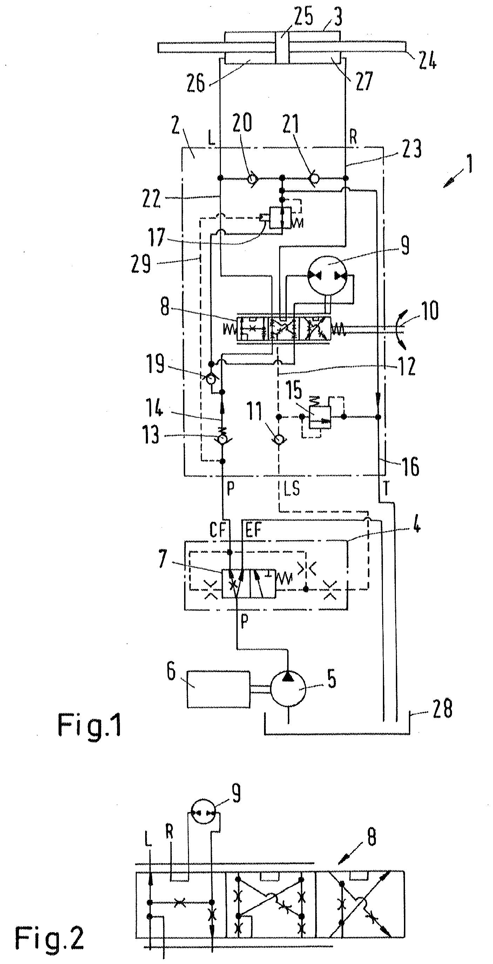

Fig. 1 shows a steering system 1 comprising a steering unit 2 and a steering motor 3. The steering unit 2 comprises a supply port arrangement having a supply port P and a return port T. Furthermore, the steering unit 2 comprises a load sensing port LS.

The steering unit 2 is connected to a priority valve 4. The priority valve 4 is connected to a pump 5 which is driven by a prime mover 6 of a vehicle to be steered by the steering system 1.

The priority valve 4 comprises a priority port CF which is connected to the supply port P of the steering unit 2, and an auxiliary port EF which is connected in a way not shown to other hydraulic consumers. The priority valve 4 comprises a valve element 7 the position of which is controlled by means of a pressure at the load sensing port LS.

The steering unit 2 comprises a valve arrangement 8 and a measuring motor 9.

Fig. 1 shows the valve arrangement 8 in a position with the pump 5 running and no steering, i.e. the valve arrangement 8 is in neutral position. The valve arrangement 8 is connected to a steering column 10 which can be rotated, for example, by means of a steering wheel (not shown).

The steering unit 2 comprises an inlet check valve 11 in an LS line 12, i.e. a line connecting the LS port LS and the valve arrangement 8. Furthermore, the steering unit comprises an inlet check valve 13 in a pressure line 14 connecting the supply port P and the valve arrangement 8. A pilot reduction valve 15 is arranged between the LS-line 12 and a tank line 16 which is connected to the valve arrangement 8 by means of a valve 17. Valve 15 controls a maximum steering pressure (P-T) at an end stroke of the steering motor 3 by limiting the pressure in LS-line 12 from priority valve 4. A valve 17 is controlled by pressure in pressure line 14. Valve 17 opens for return oil from valve arrangement 8 to tank 28 when the pressure in the pressure line 14 exceeds, for example, 5 bar above pressure in tank line 16. When the pressure difference drops below 5 bar, valve 17 closes for return oil from valve arrangement 8. Return oil is then led across check valve 19 into valve arrangement 8 and on out to the steering motor 3 in so called emergency steer mode. In emergency steer mode measuring motor 9 act as a hand pump, driven by the steering wheel. Suction valves 20, 21 in form of check valves are arranged between a left working line 22 and the tank line 16 and between a right working line 23 and the tank line 16, respectively. The left working line 22 connects the valve arrangement 8 and the left working port L while the right working line 23 connects the right working port R and the valve arrangement 8.

The steering motor 3 comprises a rod 24 connected to a piston 25. The steering motor 3 comprises a left working chamber 26 and a right working chamber 27. The left working chamber 26 is connected to the left working port L and the right working chamber 27 is connected to the right working port R.

The valve arrangement comprises a number of orifices or bleeds, some of which are illustrated in Fig. 2. The valve arrangement 8 comprises a fixed orifice A10 which is connected to the tank line 16 via the emergency steering valve 17. Furthermore, the valve arrangement 8 comprises a bleed A13/14 which connects the pressure line 14 and a point between the fixed orifice A10 and the measuring motor 9 as will be explained below. The orifices A13/14 can be realized by a single orifice. However, due to constructional constraints, they are realized by two orifices. The orifices A13/14 will be explained later.

Fig. 1 shows the steering system 1 in a neutral position, in which the piston 25 of the steering motor 3 is in its middle position, so that the steered wheels of the vehicle to be steered by the steering system drives straight ahead. When the pump 5 is running, the priority valve 4 will lead a main flow out of the auxiliary port EF and onto a tank 28. A limited flow will stream to the LS port LS of the steering unit 2, so that check valves 11 opens and hydraulic fluid streams on to the valve arrangement 8, further on across emergency steering valve 17 and on to the tank 28 via the tank line 16.

When the steering motor 3 is actuated to steer the vehicle to the right-hand side, the right pressure chamber 27 is pressurized via the right working port R. In this situation the valve arrangement 8 connects the pressure line 14 to the measuring motor 9 and the measuring motor 9 to the right working port R. Hydraulic fluid displaced from the left working chamber 26 is guided back to the valve arrangement 8 and through the fixed orifice A10 to the emergency steering valve 17. This emergency steering valve 17 is open, since it is actuated in an opening direction by the pressure at the supply port P via a signal line 29. Consequently, hydraulic fluid displaced from the left working chamber 26 is led back to the tank 28 via the tank line 16.

When the piston 25 of the steering motor 3 reaches the right side end stroke and cannot move any further, there is no possibility to supply further hydraulic fluid to the right working chamber 27, so that the pressure in the right working chamber 27 increases. This increased pressure is fed back to the outlet of the measuring motor 9. When the pressure on both sides of the measuring motor 9 is balanced, the measuring motor 9 can no longer rotate. This situation is experienced by the driver, since the steering wheel can no longer be rotated. In the right side end stroke, the driver experiences a hard end stop.

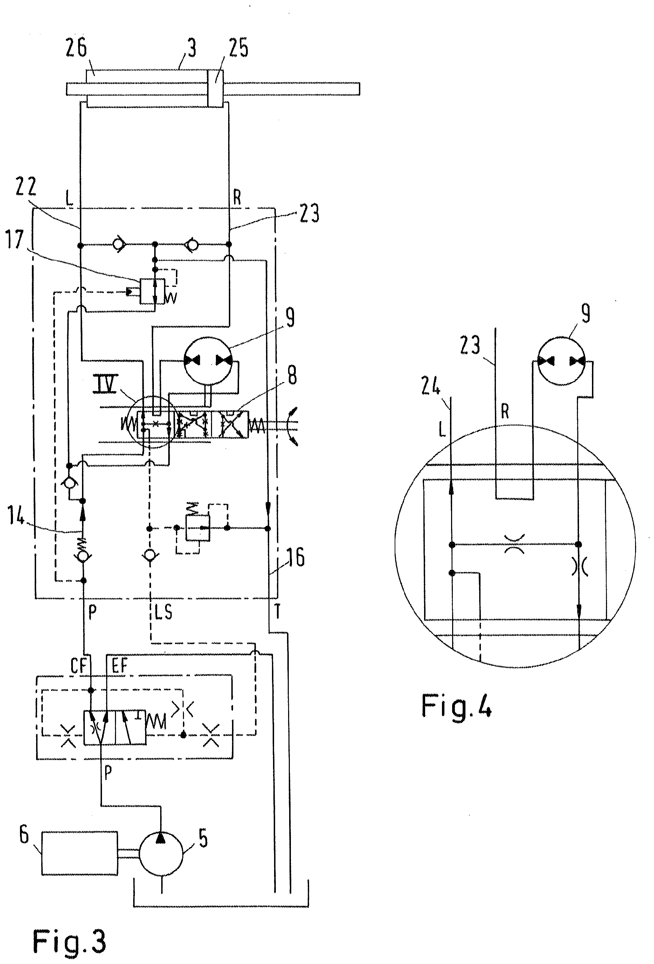

However, when the steering motor 3 is steered in the left side end stroke, as shown in Fig. 3, the situation is somewhat different.

The situation of some orifices of the valve arrangement 8 is shown in Fig. 4. Pressure from the supply port P is guided to the left working line 22 and from there to the left working port L. Hydraulic fluid displaced out of the right working chamber 27 of the steering motor 3 is guided back to the measuring motor 9. This fluid passes the measuring motor 9 and is then guided to the tank line 16 via the fixed orifice A10 and the emergency steering valve 17. Without any additional measures, there would not be a substantial pressure at the outlet of the measuring motor 9 (the right-hand side of the measuring motor 9 as shown in Fig. 3), so that the driver would not experience a hard end stroke of the steering motor 3.

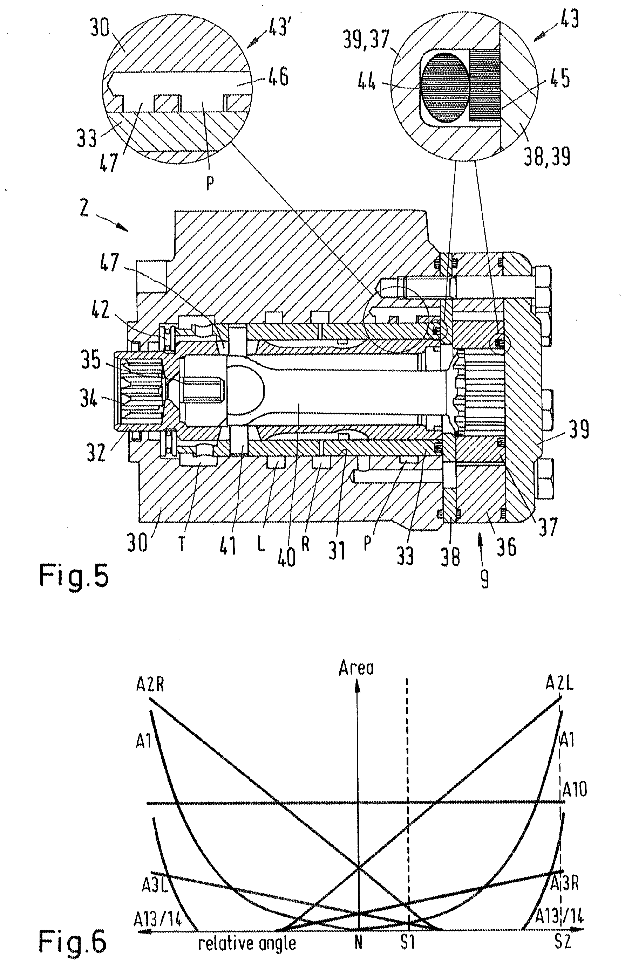

This is in particular the case, when rotating the steering wheel to the left until the steering motor 3 reaches the left side end stroke and again rotating back to neutral and then slowly to the left side. In this case, it may be possible to find a steer through phenomenon: rotating of the steering wheel with a slow speed of rotation, for example up to 10 rpm (rotation per minute) will not cause any noticeable torque resistance. This will be explained with reference to Fig. 5 and 6.

Fig. 5 shows schematically a sectional view of the steering unit 2. The steering unit 2 comprises a housing 30. The housing 30 comprises a bore 31. A set of a spool 32 and a sleeve 33 is arranged in the bore 31. The spool 32 comprises a connection geometry 34 with which it can be connected to the steering column 10 of the steering wheel.

The spool 32 and the sleeve 33 are connected by means of a neutral spring package 35.

The measuring motor 9 comprises a gear ring 36 and a gear wheel 37. A distributor plate 38 is arranged between the housing 30 and the measuring motor 9. The measuring motor 9 is provided with an end cover 39 on the side opposite the housing 30. The distributor plate 38 and the end cover 39 are considered as part of the housing for the purpose of the present illustration.

A cardan shaft 40 connects the gear wheel 37 and the sleeve 33 by means of a cross pin 41. A bearing package 42 is provided between the housing 30 and a front face of the sleeve 33 apart of a front face of the spool 32.

Friction means 43 are arranged between the sleeve 33 and the distributor plate 38 or (alternatively or additionally) between the gear wheel 37 and the end cover 39. It is also possible to arrange friction means between the gear wheel 37 and the distributor plate 38. In any case, friction means 43 are arranged between rotating parts of the steering unit 2 not connected to the steering wheel and the housing 30, 38, 39.

In the present example, the friction means 43 are arranged between a front face of the rotating part 33, 37 and the housing 30, 38, 39.

The friction means 43 comprise a compressed elastic element 44, for example, in form of an O-ring, and a slide ring 45 between the elastic element 44 and the housing part 38 or 39. The slide ring 45 avoids a wear of the elastic element 44. Only a small compression of the O-ring is necessary.

Additionally or alternatively, friction means 43' comprise a pressure chamber 46 which is loaded by a pressure of the supply port P and has an additional opening 47 in which the pressure of the supply port P can act asymmetrically and radially on the sleeve 33.

The friction means 43 comprising the elastic element 44 or the friction means 43' using the pressure at the supply port P both prevent a rotation of the sleeve 33 when the spool 32 is rotated at a low speed of rotation. The friction means 43 produce a holding torque on the sleeve 33 which is larger than a torque of the neutral spring arrangement 35 in the fully deflected position of the spool 32 in relation to the sleeve 33. However, the holding torque produced by the friction means 43, 43' is smaller than a torque produced by the measuring motor 9.

The orifice A13/14 is formed by the spool 32 and the sleeve 33. As it is shown in Fig. 6, the orifice A13/14 opens only when the spool 32 has been rotated in relation to the sleeve 33 over a rather large angle, in particular opens only, when the spool 32 has been rotated as far as possible with respect to the sleeve 33. The possible rotation is limited by the cross pin 41 which protrudes through an opening 47 in the spool 32, wherein the opening 47 has a diameter which is larger than the diameter of the cross pin 41.

When the steering motor 3 reaches the left side end position, as shown in Fig. 3, the orifice A13/14 opens so that a flow from the supply port P reaches a point between the fixed orifice A10 and the measuring motor 9. In this way, the measuring motor 9 experiences an increased pressure in the left side end position of the steering motor 3, so that the user experiences a hard end stroke.

This is the case, even if the steering wheel is rotated only slowly. The friction means 43, 43' guarantee that even in such a mode of operation the spool 32 is rotated in relation to the sleeve 33, so that the orifice A13/14 opens.

Fig. 6 shows the bleed characteristics of other orifices. It can be seen that the orifice A10 is a fixed orifice. Other orifices, like a main orifice A1 and measuring motor orifices A2R, A3R, A2L, A3L, have a conventional characteristic.

## Claims

1. Hydraulic steering unit (2) comprising a supply port arrangement having a supply port (P) and a return port (T), a working port arrangement having two working ports (L, R), a steering valve arrangement (8) arranged between the supply port arrangement and the working port arrangement and having two valve elements (32, 33) arranged in a housing (30, 38, 39) and being movable in relation to each other to change area characteristics of orifices (A13/14), and a measuring motor (9) arranged in a line between the steering valve arrangement (8) and one of the working ports (L, R), **characterized in that** backpressure means are provided generating a backpressure on the measuring motor (9), wherein the backpressure means are controlled by the valve elements (32, 33), and friction means (43, 43') are provided between one of the valve elements (33) and the housing (30, 38, 39) or a rotating part of the measuring motor (9) and the housing (30, 38, 39), respectively.

2. Hydraulic steering unit according to claim 1, **characterized in that** one of the valve elements is a spool (32) actuated by a steering command device and the other valve element is a sleeve (33) surrounding the spool (32), wherein the friction means (43, 43') act on the sleeve (33).

3. Hydraulic steering unit according to claim 2, **characterized in that** the spool (32) and the sleeve (33) are connected by a neutral spring arrangement (35), wherein the friction means (43, 43') produce a holding torque which is larger than a torque of the neutral spring arrangement (35) in a predetermined angle of rotation between spool (32) and sleeve (33).

4. Hydraulic steering unit according to claim 3, **characterized in that** the sleeve (33) is connected to the measuring motor (9) and the friction means (43, 43') produce a holding torque which is smaller than a torque produced by the measuring motor (9).

5. Hydraulic steering unit according to any of claims 1 to 4, **characterized in that** the friction means (43, 43') comprise a compressed elastic element (44) between the sleeve (33) and the housing (30, 38, 39) and/or between a rotating element (37) of the measuring motor and the housing (30, 38, 39).

6. Hydraulic steering unit according to claim 5, **characterized in that** the elastic element (44) is arranged at a front face of the sleeve (33) or of the rotating element (37), respectively.

7. Hydraulic steering unit according to claim 5 or 6, **characterized in that** a slide ring (45) is arranged between the elastic element (44) and the housing (30, 38, 39).

8. Hydraulic steering unit according to claim 7, **characterized in that** the slide ring (45) is made of a metal, hard plastic or polytetrafluorethylene.

9. Hydraulic steering unit according to any of claims 5 to 8, **characterized in that** the elastic element (44) is in form of an O-ring.

10. Hydraulic steering unit according to any of claims 1 to 9, **characterized in that** the friction means (43, 43') comprise a pressure chamber (46) connected to the supply port (P), wherein a pressure in the pressure chamber (46) acts radially and asymmetrically on the sleeve (33).

11. Hydraulic steering unit according to any of claims 1 to 10, **characterized in that** the backpressure means comprise in the valve arrangement (8) a return orifice (A10) between the measuring motor (9) and the tank port (T) and a variable orifice (A13/14) connected to the supply port (P) and to a point between the return orifice (A10) and the measuring motor (9).

12. Hydraulic steering unit according to claim 11, **characterized in that** the return orifice (A10) is a fixed orifice.

## Patentansprüche

1. Hydraulische Lenkeinheit (2) umfassend eine Versorgungsanschlussanordnung mit einem Versorgungsanschluss (P) und einem Rücklaufanschluss (T), eine Arbeitsanschlussanordnung mit zwei Arbeitsanschlüssen (L, R), eine Lenkventilanordnung (8), die zwischen der Versorgungsanschlussanordnung und der Arbeitsanschlussanordnung angeordnet ist und zwei in einem Gehäuse (30, 38, 39) angeordnete Ventilelemente (32, 33) aufweist, die relativ zueinander beweglich sind, um Flächencharakteristiken von Öffnungen (A13/A14) zu verändern, und einen Messmotor (9), der in einer Leitung zwischen der Lenkventilanordnung (8) und einem der Arbeitsanschlüsse (L, R) angeordnet ist, **dadurch gekennzeichnet, dass** Gegendruckmittel vorgesehen sind, die einen Gegendruck auf den Messmotor (9) ausüben, wobei die Gegendruckmittel durch die Ventilelemente (32, 33) gesteuert werden, und Reibungsmittel (43, 43') entsprechend zwischen einem der Ventilelemente (33) und dem Gehäuse (30, 38, 39) oder einem rotierenden Teil des Messmotors (9) und dem Gehäuse (30, 38, 39) vorgesehen sind.

2. Hydraulische Lenkeinheit nach Anspruch 2, **dadurch gekennzeichnet, dass** eines der Ventilelemente ein durch eine Lenkbefehlseinrichtung betätigter Schieber (32) und das andere Ventilelement eine den Schieber (32) umgebende Hülse (33) ist, wobei die Reibmittel (43, 43') auf die Hülse (33) wirken.

3. Hydraulische Lenkeinheit nach Anspruch 2, **dadurch gekennzeichnet, dass** der Schieber (32) und die Hülse (33) durch eine neutrale Federanordnung (35) verbunden sind, wobei die Reibmittel (43, 43') ein Haltemoment erzeugen, das größer ist als ein Drehmoment der neutralen Federanordnung (35) in einem vorbestimmten Drehwinkel zwischen Schieber (32) und Hülse (33).

4. Hydraulische Lenkeinheit nach Anspruch 3, **dadurch gekennzeichnet, dass** die Hülse (33) mit dem Messmotor (9) verbunden ist und die Reibmittel (43, 43') ein Haltemoment erzeugen, das kleiner ist als ein Drehmoment, das vom Messmotor (9) erzeugt wird.

5. Hydraulische Lenkeinheit nach einem der Ansprüche 1 bis 4, **dadurch gekennzeichnet, dass** die Reibmittel (43, 43') ein komprimiertes elastisches Element (44) zwischen der Hülse (33) und dem Gehäuse (30,38,39) und/oder zwischen einem Rotationselement (37) des Messmotors und dem Gehäuse (30,38,39) umfassen.

6. Hydraulische Lenkeinheit nach Anspruch 5, **dadurch gekennzeichnet, dass** das elastische Element (44) entsprechend an einer Stirnseite der Hülse (33) oder des Rotationselements (37) angeordnet ist.

7. Hydraulische Lenkeinheit nach einem der Ansprüche 5 oder 6, **dadurch gekennzeichnet, dass** ein Gleitring (45) zwischen dem elastischen Element (44) und dem Gehäuse (30, 38, 39) angeordnet ist.

8. Hydraulische Lenkeinheit nach Anspruch 7, **dadurch gekennzeichnet, dass** der Gleitring (45) aus einem Metall, Hartplastik oder Polytetrafluorethylen besteht.

9. Hydraulische Lenkeinheit nach einem der Ansprüche 5 bis 8, **dadurch gekennzeichnet, dass** das elastische Element (44) die Form eines O-rings hat.

10. Hydraulische Lenkeinheit nach einem der Ansprüche 1 bis 9, **dadurch gekennzeichnet, dass** die Reibmittel (43, 43') eine Druckkammer (46) umfassen, die mit Versorgungsanschluss (P) verbunden ist, wobei ein Druck in der Druckkammer (46) radial und asymmetrisch auf die Hülse (33) wirkt.

11. Hydraulische Lenkeinheit nach einem der Ansprüche 1 bis 10, **dadurch gekennzeichnet, dass** die Gegendruckmittel in der Ventilanordnung (8) eine Rücklauföffnung (A10) zwischen dem Messmotor (9) und dem Tankanschluss (T) und eine variable Öffnung (A13/A14) umfassen, die mit dem Versorgungsanschluss (P) und mit einem Punkt zwischen der Rücklauföffnung (A10) und dem Messmotor (9) verbunden ist.

12. Hydraulische Lenkeinheit nach Anspruch 11, **dadurch gekennzeichnet, dass** die Rücklauföffnung (A10) eine feste Öffnung ist.

## Revendications

1. Unité de direction hydraulique (2) comprenant un agencement de port d'alimentation présentant un port d'alimentation (P) et un port de retour (T), un agencement de ports de travail présentant deux ports de travail (L, R), un agencement de soupape de direction (8) agencé entre l'agencement de port d'alimentation et l'agencement de ports de travail et présentant deux éléments de soupape (32, 33) agencés dans un boîtier (30, 38, 39) et pouvant être déplacés l'un par rapport à l'autre pour modifier des caractéristiques de surface des orifices (A13/14), et un moteur de mesure (9) agencé dans une ligne entre l'agencement de soupape de direction (8) et un des ports de travail (L, R), **caractérisée en ce que** des moyens de contre-pression sont prévus pour générer une contre-pression sur le moteur de mesure (9), où les moyens de contre-pression sont commandés par les éléments de soupape (32, 33), et des moyens de frottement (43, 43') sont prévus entre un des éléments de soupape (33) et le boîtier (30, 38, 39) ou entre une pièce rotative du moteur de mesure (9) et le boîtier (30, 38, 39), respectivement.

2. Unité de direction hydraulique selon la revendication 1, **caractérisée en ce qu'**un des éléments de soupape est un tiroir (32) actionné par un dispositif de commande de direction et l'autre élément de soupape est un manchon (33) entourant le tiroir (32), où les moyens de frottement (43, 43') agissent sur le manchon (33).

3. Unité de direction hydraulique selon la revendication 2, **caractérisée en ce que** le tiroir (32) et le manchon (33) sont reliés par un agencement de ressort neutre (35), dans laquelle les moyens de frottement (43, 43') produisent un couple de maintien qui est plus grand qu'un couple de l'agencement de ressort neutre (35) dans un angle de rotation prédéterminé entre le tiroir (32) et le manchon (33).

4. Unité de direction hydraulique selon la revendication 3, **caractérisée en ce que** le manchon (33) est relié au moteur de mesure (9) et les moyens de frottement (43, 43') produisent un couple de maintien qui est plus petit qu'un couple produit par le moteur de mesure (9).

5. Unité de direction hydraulique selon l'une quelconque des revendications 1 à 4, **caractérisée en ce que** les moyens de frottement (43, 43') comprennent un élément élastique comprimé (44) entre le manchon (33) et le boîtier (30, 38, 39) et/ou entre un élément rotatif (37) du moteur de mesure et le boîtier (30, 38, 39).

6. Unité de direction hydraulique selon la revendication 5, **caractérisée en ce que** l'élément élastique (44) est agencé au niveau d'une face avant du manchon (33) ou de l'élément rotatif (37), respectivement.

7. Unité de direction hydraulique selon la revendication 5 ou 6, **caractérisée en ce qu'**une bague coulissante (45) est agencée entre l'élément élastique (44) et le boîtier (30, 38, 39).

8. Unité de direction hydraulique selon la revendication 7, **caractérisée en ce que** la bague coulissante (45) est constituée de métal, de plastique dur ou de polytétrafluoroéthylène.

9. Unité de direction hydraulique selon l'une quelconque des revendications 5 à 8, **caractérisée en ce que** l'élément élastique (44) a la forme d'un joint torique.

10. Unité de direction hydraulique selon l'une quelconque des revendications 1 à 9, **caractérisée en ce que** les moyens de frottement (43, 43') comprennent une chambre de pression (46) reliée au port d'alimentation (P), dans laquelle la pression dans la chambre de pression (46) agit radialement et asymétriquement sur le manchon (33).

11. Unité de direction hydraulique selon l'une quelconque des revendications 1 à 10, **caractérisée en ce que** les moyens de contre-pression comprennent, dans l'agencement de soupape (8), un orifice de retour (A10) entre le moteur de mesure (9) et le port de retour (T), et un orifice variable (A13/14) relié au port d'alimentation (P) et à un point situé entre l'orifice de retour (A10) et le moteur de mesure (9).

12. Unité de direction hydraulique selon la revendication 11, **caractérisée en ce que** l'orifice de retour (A10) est un orifice fixe.
